(19) Europäisches Patentamt
European Patent Office
Office européen des brevets

(11) Numéro de publication: **0 037 617**
**A1**

# (12) DEMANDE DE BREVET EUROPEEN

(21) Numéro de dépôt: **81200381.2**

(22) Date de dépôt: **06.04.81**

(51) Int. Cl.³: **C 08 F 36/04**
C 08 F 2/38, C 08 F 4/44

(30) Priorité: **09.04.80 FR 8008109**

(43) Date de publication de la demande: **14.10.81 Bulletin 81/41**

(84) Etats contractants désignés: **AT BE CH DE GB IT LI LU NL SE**

(71) Demandeur: **MICHELIN & CIE (Compagnie Générale des Etablissements Michelin) Société dite:**
**4 rue du Terrail**
**F-63000 Clermont-Ferrand(FR)**

(72) Inventeur: **Freppel, Christian**
**124 bis avenue Joseph Claussat**
**63400 Chamalieres(FR)**

(74) Mandataire: **Hiebel, Robert et al,**
**MICHELIN & CIE - Service K. Brevets**
**F-63040 Clermont-Ferrand Cedex(FR)**

(54) **Procédé de préparation de polymères de diènes conjugués ou de copolymères de diènes conjugués soit entre eux, soit avec un composé vinylaromatique.**

(57) Procéde permettant d'obtenir simultanément de hautes teneurs en enchaînements 1,4 trans et de faibles teneurs en 1,2 ou 3,4. Les monomères sont mis à réagir en présence d'une composition catalytique constituée par un initiateur organolithien et par un cocatalyseur composite comprenant un composé du baryum, du strontium ou du calcium et un composé organométallique des métaux des groupes II B ou III A de la classification périodique dés éléments du tableau de Mendéléev, et en cours de polymérisation on ajoute de l'hydrogèns au milieu réactionnel.

EP 0 037 617 A1

La présente invention a pour objet un procédé permettant de modifier la distribution des masses moléculaires lors de la synthèse de polymères de diènes conjugués et de copolymères de diènes conjugués avec d'autres diènes conjugués ou avec des composés vinylaromatiques.

Il est connu d'après les demandes de brevet d'invention français N° 74 19 475, 75 20 007 et 76 04 115, qui sont toutes au nom de la demanderesse, de préparer des polymères de diènes conjugués et des copolymères de diènes conjugués avec d'autres diènes conjugués ou avec des composés vinylaromatiques ayant simultanément une très faible teneur en enchaînements 1,2 ou 3,4 et une teneur élevée en enchaînements 1,4 trans à l'aide d'une composition catalytique comprenant un initiateur organolithien, un composé du baryum, du strontium ou du calcium et un composé organométallique d'un métal des groupes 2 B ou 3 A de la classification périodique des éléments du tableau de Mendeleev et éventuellement un alcoolate de métal alcalin.

Il est souhaitable de disposer de moyens permettant de modifier et de régler la distribution des masses moléculaires des polymères de diènes conjugués et des copolymères de diènes conjugués avec d'autres diènes conjugués ou avec des composés vinylaromatiques pour un certain nombre d'applications industrielles de ces produits car la modification de la distribution des masses moléculaires permet d'améliorer grandement certaines propriétés comme par exemple l'aptitude à être travaillé sur outil, le fluage à froid, la cohésion à cru, le collant à cru, etc. sans pénaliser les autres propriétés.

Il est connu de l'homme de l'art qu'il est possible d'élargir la distribution des masses moléculaires et d'obtenir des polymères bimodaux ou multimodaux en mélangeant plusieurs

polymères de visocistés différentes.

Cependant, un tel procédé présente l'inconvénient de nécessiter la synthèse séparée de plusieurs polymères et copolymères de viscosités différentes ce qui entraîne des problèmes de reproductibilité du procédé, nécessite des quantités catalytiques très importantes, entraîne de longs délais et rend finalement ce procédé inintéressant tant du point de vue technique que du point de vue économique.

De même, il est connu de modifier la distribution des masses moléculaires de polymères et de copolymères dans des procédés réalisés soit en discontinu, soit en continu en fractionnant la quantité de catalyseur nécessaire et en l'ajoutant à des moments différents lors du déroulement de la polymérisation ou de la copolymérisation. Cependant, un tel mode opératoire qui nécessite également des quantités catalytiques très importantes, d'autant plus grandes que l'élargissement de la distribution des masses moléculaires souhaité est plus important, est par conséquent lui aussi très coûteux.
De plus, il serait extrêmement difficile à réaliser industriellement.

La présente invention a pour objet de remédier à ces inconvénients en fournissant un procédé qui soit économiquement plus intéressant et qi permette de modifier et de régler facilement la distribution des masses moléculaires au cours de la synthèse de polymères de diènes conjugués et de copolymères de diènes conjugués avec d'autres diènes conjugués ou avec des composés vinylaromatiques et d'obtenir des polymères et des copolymères bimodaux ou multimodaux.

La demanderesse a trouvé de manière inattendue qu'il est possible d'atteindre ce but lorsque la polymérisation des diènes conjugués ou la copolymérisation des diènes conjugués avec d'autres diènes conjugués ou des composés vinylaromatiques à l'aide des systèmes catalytiques précités est effectuée en présence d'un agent modificateur qui n'est pas un initiateur de polymérisation ou de copolymérisation.

...

Ainsi la présente invention concerne un procédé de préparation de polymères de diènes conjugués et de copolymères de diènes conjugués avec d'autres diènes conjugués ou avec des composés vinylaromatiques,qui soient bimodaux ou multimodaux, consistant à faire réagir les monomères entre 20° C et 200° C en présence d'une composition catalytique comprenant un initiateur organolithien, un composé du baryum ou du strontium ou du calcium, un composé organométallique d'un métal des groupes 2B ou 3A de la classification périodique des éléments du tableau de Mendeleev, caractérisé en ce qu'on ajoute au milieu réactionnel en cours de réaction de l'hydrogène à titre d'agent modificateur.

Ce procédé permet de modifier à volonté la distribution des masses moléculaires et d'obtenir des propriétés de collant à cru, cohésion à cru et travaillabilité sur outil améliorées sans nécessiter des quantités supplémentaires de catalyseur et sans simultanément pénaliser les autres propriétés.

Le procédé conforme à l'invention permet d'obtenir des polymères et des copolymères ayant des distributions bimodales ou multimodales des masses moléculaires. La ou les fraction(s) obtenue(s) après addition de l'agent modificateur sont de bas poids moléculaire. En outre, les masses moléculaires moyennes de cette ou ces fraction(s)de faibles masses moléculaires ainsi que la quantité de ces bas poids moléculaires sont fonction de la quantité d'agent modificateur ajouté et du moment auquel cet agent est ajouté lors du déroulement de la polymérisation.

Il est possible en choisissant la quantité à ajouter et le moment de l'addition en fonction du pourcentage de conversion des monomères à l'instant considéré par rapport au pourcentage de conversion final, de préparer des polymères et copolymères bimodaux ou multimodaux dont on peut régler à volonté la quantité des hauts poids et des bas poids moléculaires ainsi que les masses moléculaires moyennes respectives de ces hauts poids et bas poids moléculaires.

...

Il est souhaitable d'utiliser dans le milieu réactionnel des quantités d'hydrogène solubilisé comprises entre 0,1 et 100 ppm. Plus la quantité d'hydrogène solubilisé est importante, plus les bas poids moléculaires seront de faible masse.

L'hydrogène est ajouté en cours de réaction et de préférence lorsque la conversion des monomères est comprise entre 20 % et 90 %. Le procédé peut être réalisé en masse ou en solution dans un solvant hydrocarboné soit en discontinu, soit en continu. Dans ce dernier cas, on opère dans deux ou plusieurs réacteurs placés en série à des températures de polymérisation identiques ou différentes. Selon l'importance de l'effet désiré, l'hydrogène est ajouté en une ou plusieurs fois.

Par "initiateur organolithien" on entend en premier lieu tout composé organométallique comportant une ou plusieurs liaisons carbone-lithium, en second lieu tout adduct ionique-radicalaire du lithium et de certains hydrocarbures aromatiques polynucléaires, en troisième lieu le lithium métallique lui-même, ainsi que finalement les oligomères produits par l'addition du lithium sur les diènes conjugués ou les styrènes substitués.

Comme exemples représentatifs d'initiateur organolithien, on peut citer les composés suivants :

. Les organolithiens aliphatiques, tels que l'éthyl-lithium, le n-butyl-lithium, l'isobutyl-lithium, le sec. butyl-lithium, le ter.butyl-lithium, l'isopropyl-lithium, le n-amyl-lithium, l'isoamyl-lithium ; les organolithiens alcéniques tels que l'allyl-lithium, le propényl-lithium, l'isobutényl-lithium, les polymères "vivants" polybutadiényl-lithium, polyisoprényl-lithium, polystyryl-lithium ; les polyméthylènes dilithium tels que le 1,4-dilithiobutane,

...

le 1,5-dilithiopentane, le 1-20-dilithioeicosane ; les organolithiens aromatiques tels que le benzyl-lithium, le phényllithium, le 1,1-diphényl-méthyl-lithium ; les polylithiens résultant de la réaction du lithium métallique avec des composés éthyléniques aryl-substitués, tels que le 1,1-diphényléthylène, le trans-stilbène, le tétraphényléthylène ; les ions radicaux tels que le lithium-naphtalène, le lithium anthracène, le lithium-chrysène, le lithium-diphényle, ainsi que les dérivés substitués par un ou plusieurs alcoyles.

On entend par "composé du baryum, du strontium ou du calcium"les hydrures $H_2$ Ba, $H_2$ Sr et $H_2$ Ca, les sels d'acides organiques mono-ou polyfonctionnels de formules $(R - COO)_2$ Ba ou Sr ou Ca, $R_1 - (COO)_2$ Ba ou Sr ou Ca dans lesquelles R et $R_1$ sont des radicaux organiques, le premier monovalent, le second divalent, ne portant pas d'autres fonctions susceptibles d'inactiver l'initiateur organolithien, et les thioacides correspondants, également les alcoolates mono-ou polyfonctionnels et les thiolates correspondants ; les phénates mono-ou polyfonctionnels et les thiophénates correspondants ; les sels d'acides alcools et d'acides phénols de baryum, de strontium ou de calcium tels que les produits de réaction du baryum, du strontium ou du calcium avec l'acétylacétone, le dibenzoylméthane, la thénoyltrifluoro-acétone, la benzoyltrifluoro-acétone, la benzoyl-acétone ; les dérivés organiques du baryum,du strontium ou du calcium tels que ceux du 1,1- diphényléthylène, du 1,2-acénaphtylène, du tétraphénylbutane, du α-méthyl-styrène, ou encore ceux tels que le diphényl baryum, strontium ou calcium, le bis-cyclopentadiényl baryum, strontium ou calcium, les trialcoylsilyls baryum, strontium ou calcium, le triphénylsilyl baryum, strontium ou calcium ; les dérivés organiques mixtes tels que l'iodure de phényl-baryum, l'iodure méthyl-strontium ou calcium, les sels de baryum, strontium ou de calcium des amines secondaires ; les métaux cétyles tels que la benzophénone baryum, strontium ou calcium, la cinnamone baryum, strontium ou calcium et les produits alcoylés correspondants, ainsi que les homologues soufrés ; les ions radicaux du baryum, strontium et du calcium tels que ceux du naphtalène, de l'anthracène, du chrysène, du diphényle, etc.

Comme exemples représentatifs des composés organométalliques des groupes 2 B ou 3 A, on peut citer :

Les dialcoyl-zinc ou cadmium tels que le diéthyl-zinc, le diéthyl-cadmium ; les organoaluminiques halogénés ou non tels que le triéthyl-aluminium, le tri-isobutyl-aluminium, le chlorure de diéthyl-aluminium, le dichlorure d'éthyl-aluminium, le sesquichlorure d'éthyl-aluminium, le sesquichlorure de méthyl-aluminium ; les hydrures de dialcoyl-aluminium, tels que l'hydrure de diéthyl-aluminium, l'hydrure de diisobutyl-aluminium, etc.

Les composés du baryum, du strontium ou du calcium ainsi que les composés organométalliques du groupe 2B ou 3A peuvent se présenter sous forme d'un composé unique répondant à l'une des formules suivantes :

$$Me\ (M\ R_1R_2R_3R_4)_2$$

$$Me\ \ M'(R_1)_4$$

dans lesquelles Me représente un métal du groupe 2A, M un métal du groupe 3A, M' un métal du groupe 2B de la classification périodique des éléments du tableau de Mendeleev, $R_1$, $R_2$, $R_3$ représentant un radical alcoyle ou aralcoyle, $R_4$ représente soit un reste alcoyle ou aralcoyle, soit un reste XB dans lequel X représente un atome d'oxygène, de soufre ou d'azote et B représente soit un radical alcoyle ou aralcoyle, soit un reste $M(R_5R_6)$ dans lequel $R_5$, $R_6$ représentent un radical alcoyle ou aralcoyle.

La polymérisation et copolymérisation peuvent également être réalisées à l'aide de la composition catalytique définie ci-dessus et comportant en outre un alcoolate de métal alcalin et plus particulièrement un alcoolate répondant à l'une des deux formules suivantes :

$$R(O\ CH_2\ CH_2)_n\ O\ M''$$

$$(R)_2\ N\ CH_2\ CH_2\ O\ M''$$

dans lesquelles M" représente un métal alcalin tel que le lithium, le sodium, le potassium et R représente un radical alcoyle et n un nombre entier.

A titre de solvant hydrocarboné on peut utiliser des solvants aliphatiques comme l'hexane ou l'heptane ou aromatiques comme par exemple le benzène, le toluène.

Le procédé selon l'invention convient notamment pour la polymérisation de diènes conjugués et la copolymérisation de diènes conjugués entre eux ou avec des composés vinylaromatiques.

BAD ORIGINAL

Comme exemples représentatifs de diènes, on citera les diènes conjugués, tels que : le butadiène-1,3, l'isoprène, le 2,3-diméthyl-butadiène-1,3, le pentadiène-1,3, le méthyl-2-pentadiène-1,3, le 2,4-hexadiène.

Comme exemples représentatifs de composés vinylaromatiques, on citera : le styrène, l'ortho-, méta-, para-méthyl styrène ou le mélange commercial "vinyl-toluène", les di- et polyméthyl styrènes, le p-teriobutyl styrène, les vinylnaphtalènes, les méthoxystyrènes, les halogénostyrènes, le vinylmésitylène, le divinylbenzène.

L'exemple non limitatif suivant est donné à titre d'illustration de l'invention. Dans cet exemple, les viscosités inhérentes sont établies à 25° C en solution à 1g/litre dans le toluène ; les concentrations en composés constituant la composition catalytique sont exprimés en micromoles pour 100 g de monomères. Les pourcentages en enchaînements trans, 1,2 sont exprimés par rapport à la partie polybutadiénique et le pourcentage de styrène est exprimé par rapport à la quantité totale de copolymère obtenu. Le temps écoulé entre le début de la réaction et le moment où l'on ajoute l'agent modificateur est désigné par "temps écoulé" et le pourcentage de conversion atteint au moment de l'addition de l'agent modificateur est désigné par "% conv.". Les figures représentent la distribution des masses moléculaires des polymères et copolymères obtenus à l'issue de la réaction qui a été obtenue par chromatographie par perméation de gel. On représente en abscisse les masses moléculaires et en ordonnée une différence d'indice de réfraction $\Delta i$.

Exemple

On réalise deux essais. Dans des bouteilles Steinie de 250 ml sous pression d'azote on introduit 100 ml de toluène à titre de solvant, 17,5 g de monomères à raison de 77 % de butadiène et 23 % de styrène en poids. On ajoute ensuite dans l'ordre le système catalytique constitué par

- le cocatalyseur préformé pendant 30 mn par réaction entre l'éthyl diglycolate de baryum, $Ba\ [O\ (CH_2CH_2\ O)_2\ C_2H_5\ ]_2$ et le triisobutyl aluminium, $Al\ (i\text{-}Bu)_3$,
- le butyl lithium,

BAD ORIGINAL

puis on place les bouteilles dans un bac thermostaté à 75° C où elles sont agitées.

Dans le deuxième essai, on ajoute en cours de polymérisation de l'hydrogène de façon à avoir 7 ppm d'hydrogène solubilisé dans le milieu réactionnel. Au bout d'une heure, toutes les polymérisations sont stoppées par addition de méthanol et les copolymères sont récupérés de façon classique.

Les résultats sont consignés dans le tableau.

On constate que l'hydrogène introduit en cours de polymérisation donne une distribution bimodale des masses moléculaires.

...

TABLEAU

| Essai | système catalytique | | | addition d'$H_2$ | | Quantité d'$H_2$ sol. en ppm. | % Conv. final | Copolymères | | | | |
|---|---|---|---|---|---|---|---|---|---|---|---|---|
| | $AlR_3$ | $Ba(OR)_2$ | BuLi | temps écoulé | % conv. | | | visco-sité | % 1-2 | %trans | %styrene | GPC fig. |
| T | 4000 | 500 | 1500 | | | | 83 | 1,52 | 5 | 79 | 10 | 1.1 |
| 1 | 4000 | 500 | 1500 | 15 min | 54 | 7 | 85 | 1,1 | 4,8 | 79 | 11 | 1.2 |

REVENDICATIONS

1. Procédé de préparation de polymères bimodaux ou multimodaux de diènes conjugués et de copolymères bimodaux ou multimodaux de diènes conjugués avec d'autres diènes conjugués ou avec des composés vinylaromatiques consistant à faire réagir les monomères entre 20° C et 200° C en présence d'une composition catalytique comprenant un initiateur organolithien, un composé du baryum, de strontium ou du calcium, un composé organométallique d'un métal des groupes 2B ou 3A de la classification périodique des éléments du tableau de Mendeleev, caractérisé en ce qu'on ajoute au milieu réactionnel en cours de polymérisation de l'hydrogène.

2. Procédé selon la revendication 1, caractérisé en ce que la quantité d'hydrogène solubilisé dans le milieu réactionnel est comprise entre 0,1 et 100 ppm.

3. Procédé selon la revendication 2, caractérisé en ce qu'on opère la réaction en présence d'un solvant hydrocarboné.

4. Procédé selon l'une quelconque des revendications 1, 2 ou 3, caractérisé en ce que l'on opère la réaction en continu.

Fig. 1.1

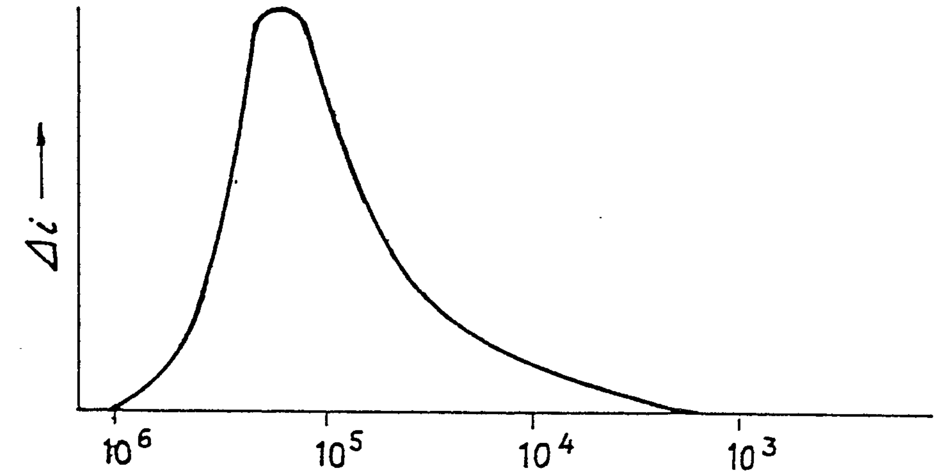


Fig. 1.2

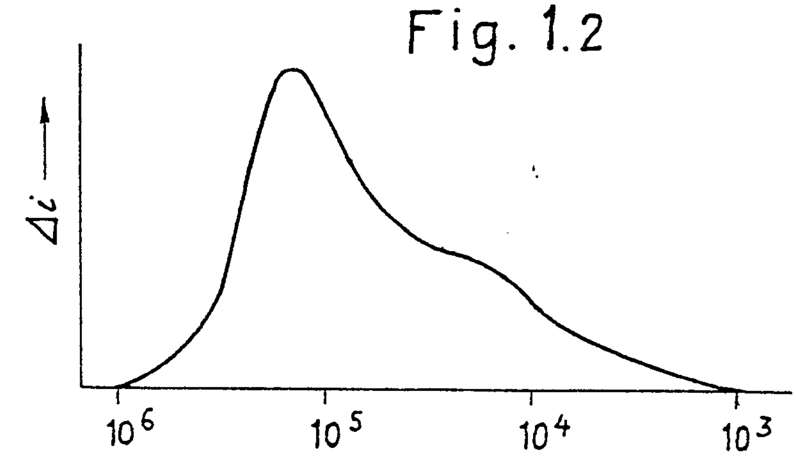

0037617

Office européen des brevets

# RAPPORT DE RECHERCHE EUROPEENNE

Numéro de la demande

EP 81 20 0381

## DOCUMENTS CONSIDERES COMME PERTINENTS

| Catégorie | Citation du document avec indication, en cas de besoin, des parties pertinentes | Revendication concernée |
|---|---|---|
| D | FR - A - 2 340 958 (MICHELIN)<br>* Revendication 1 *<br>-- | 1,3,4 |
| D | FR - A - 2 315 511 (MICHELIN)<br>* Revendication 1 *<br>-- | 1,3,4 |
| D | FR - A - 2 273 822 (MICHELIN)<br>* Revendication 1 *<br>-- | 1,3,4 |
| | FR - A - 1 584 855 (MONSANTO)<br>* Résumé 5; page 4, lignes 8-11 *<br>-- | 2 |
| | US - A - 3 051 690 (E.J. VANDENBERG)<br>* Revendication 3; colonne 4, ligne 68 - colonne 5, ligne 2 *<br>-- | 2 |
| A | FR - A - 1 441 732 (MICHELIN)<br>* Résumé 4 *<br>---- | |

CLASSEMENT DE LA DEMANDE (Int. Cl.³)

C 08 F 36/04
2/38
4/44

DOMAINES TECHNIQUES RECHERCHES (Int. Cl.³)

C 08 F 36/04
136/04
236/04
2/00-
2/06
2/38
4/42
4/44
4/50-
4/54

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

✓ Le présent rapport de recherche a été établi pour toutes les revendications

| Lieu de la recherche | Date d'achèvement de la recherche | Examinateur |
|---|---|---|
| La Haye | 22-06-1981 | V.HUMBEECK |